# EUROPÄISCHE PATENTSCHRIFT

(11) **EP 2 194 268 B1**
(45) Veröffentlichungstag und Bekanntmachung des Hinweises auf die Patenterteilung: **24.04.2019**
(21) Anmeldenummer: 10156260.1
(22) Anmeldetag: 26.06.2002
(51) Int. Cl.: H02K 3/12, H02K 3/14, H02K 3/28, H02K 7/18, H02K 15/085, F03D 9/25

(54) **Windenergieanlage mit Ringgenerator**
Wind energy installation comprising a ring generator
Installation d'énergie éolienne à génératrice annulaire

(30) Priorität: 31.07.2001 DE 10137270; 13.09.2001 DE 10145018
(43) Veröffentlichungstag der Anmeldung: 09.06.2010
(62) Teilanmeldung aus: 05102273.9
(73) Patentinhaber: Wobben Properties GmbH, 26607 Aurich (DE)
(72) Erfinder: Wobben, Aloys, 26607 Aurich (DE)
(74) Vertreter: Eisenführ Speiser

(56) Entgegenhaltungen:
- EP-A- 0 058 352
- GB-A- 2 149 595
- US-A- 5 881 778
- SPOONER E ET AL: "Direct coupled, permanent magnet generators for wind turbine applications" IEE PROCEEDINGS: ELECTRIC POWER APPLICATIONS, INSTITUTION OF ELECTRICAL ENGINEERS, GB, Bd. 143, Nr. 1, 8. Januar 1996 (1996-01-08), Seiten 1-8, XP006006369 ISSN: 1350-2352

## Beschreibung

Die vorliegende Erfindung betrifft eine Vorrichtung zur Herstellung eines Stators einer Synchronmaschine.

Ein bekanntes Verfahren zum Herstellen von Statorwicklungen bei Generatoren umfasst die Verwendung sogenannter Formspulen. Diese Formspulen sind in ihrer Form bereits an die Nuten und Nutenabstände des Stators angepasste Einzelwicklungen der Statorwicklung, die zunächst einzeln in die Nuten eingelegt und dann untereinander verbunden werden.

Allerdings sind Windenergieanlagen während des Betriebes stets großen Belastungen ausgesetzt. Mit zunehmender Windgeschwindigkeit steigt die Leistung der Windenergieanlage aber gleichzeitig auch die mechanische Belastung. Daraus ergibt sich, dass die Beanspruchung der Windenergieanlage in mechanischer und in elektrischer Hinsicht im Wesentlichen gleichzeitig ansteigen. Bei hohen Windgeschwindigkeiten ist die mechanische Beanspruchung der Anlage hoch und gleichzeitig wird viel elektrische Energie erzeugt, so dass auch die Beanspruchung der elektrischen Komponenten hoch ist.

Besonders beansprucht wird in diesem Fall der Generator der Windenergieanlage, der mechanischen und elektrischen Beanspruchungen unterworfen ist. Aus dieser Kombination ergeben sich Probleme, wenn z. B. in Folge hoher erzeugter elektrischer Ströme die Temperatur im Bereich des Generators ebenfalls hoch ist und in Folge mechanischer Beanspruchung Verbindungen zwischen einzelnen Komponenten mit Schwingungen beaufschlagt werden. Kommt es durch die thermische Ausdehnung noch zu einem geringfügigen Spiel bzw. einer Lockerung, können die mechanischen Belastungen hier zu einem Defekt oder sogar einer Beschädigung führen.

Betrifft diese Störung die Statorwicklung bzw. eine Phase davon, fällt zumindest diese Phase für die Energiegewinnung aus. Weiterhin entsteht eine zusätzliche asymmetrische Belastung im Generator, da diese Phase infolge der Unterbrechung wie im Leerlaufbetrieb wirkt. Dabei sind mechanische Schäden durch gelöste und frei bewegliche Bauteile wie Verbindungshülsen nicht einmal berücksichtigt.

Bei einem sechsphasig gewickelten Stator eines Generators mit 72 Polen ergeben sich 432 Formspulen, die durch 864 Verbindungsstellen untereinander verbunden sind. Diese Verbindungsstellen sind gewöhnlich als Schraub-, Klemm- oder Lötverbindungen ausgeführt.

Unter Berücksichtigung (beliebig kleiner) statistischer Wahrscheinlichkeiten ergibt sich aus der hohen Anzahl von Verbindungsstellen und den permanenten Lastwechseln, dass selbst bei einer sorgfältigen Herstellung der Verbindung zwischen den Formspulen hier eine beträchtliche Störungsquelle vorhanden ist. Dabei ist bei den vorstehenden Betrachtungen nur ein Stator berücksichtigt. Der Aspekt der Serienfertigung verdeutlicht die tatsächliche Wahrscheinlichkeit einer solchen Störung.

GB 2 149 595 A bzw US4,318,019 A zeigen einen Alternator eines PKWs, bzw einer Windenergieanlage wobei jeweils der Stator eine ununterbrochene Wicklung aufweist. US 5,881,778 A betrifft einen Alternator eines PKWs sowie ein Verfahren zum Herstellen dieses Alternators.

US 4,318,019 A zeigt einen Generator einer Windenergieanlage.

Aufgabe der vorliegenden Erfindung ist es daher eine Vorrichtung zur Herstellung eines Stators einer Synchronmaschine anzugeben, bei dem diese oben erläuterten Probleme wenigstens verringert sind.

Diese Aufgabe wird durch eine Vorrichtung zur Herstellung eines Stators einer Synchronmaschine nach Anspruch 1 gelöst.

Die Synchronmaschine weist eine Nennleistung von mehreren hundert kW auf. Am inneren und äußeren Umfang sind am Stator voneinander beabstandete Nuten zur Aufnahme einer Statorwicklung ausgebildet. Die Wicklung wird durchgängig ohne Unterbrechung gewickelt. Die Vorrichtung zur Herstellung eines Stators weist eine Lagervorrichtung für den Stator auf, in welcher der Stator stehend gehalten wird. Der Durchmesser des Stators beträgt einige Meter.

Um Stromverdrängungs-Effekte in den einzelnen Windungen ausgleichen zu können, werden die Windungen aus wenigstens zwei Leiterbündeln hergestellt, wobei in jedem Leiterbündel eine Mehrzahl gegeneinander isolierter Leiter vorhanden ist. Diese Leiterbündel werden in einer vorgegebenen Reihenfolge in Nuten des Stators eingelegt und in ebenfalls vorgegebenen Abständen wird die Reihenfolge verändert, so dass alternierend jedes der Leiterbündel möglichst gleichmäßig von diesen Effekten betroffen ist. Durch diese gleichmäßige Beeinflussung aller Leiterbündel einer Phase kann auf Ausgleichsmaßnahmen verzichtet werden.

Um die Handhabung des Stators während der Herstellung der Wicklung zu erleichtern und eine arbeitsphysiologisch günstige Situation zu schaffen, wird der Stator in einer Lagervorrichtung gehalten, in welcher die Nuten in einer günstigen Arbeitshöhe für die Herstellung der Wicklung sind und eine Rotation des Stators in Umfangsrichtung um ein gewünschtes Maß gestattet. Dies kann bevorzugt unter Verwendung eines motorischen Antriebs erfolgen.

Weiterhin ist wenigstens eine Tragvorrichtung zum Tragen wenigstens einer Spule mit Wicklungsdraht vorgesehen. Diese Tragvorrichtung gestattet die Handhabung des Wicklungsdrahtes, z. B. in Form von Leiterbündeln, deren Länge erfindungsgemäß so bemessen ist, dass sich die Phase auf dem Stator durchgängig wickeln lässt. Die dafür benötigte Länge der Leiterbündel führt zu einem beträchtlichen Gewicht, das manuell nicht mehr handhabbar ist.

Jeweils zwei Trommeln mit Wicklungsdraht werden paarweise gehandhabt, um so beide Leiterbündel gleichzeitig handhaben zu können und eine Tragvorrichtung trägt drei Paare der Trommeln mit Wicklungsdraht, so dass unter Verwendung einer solchen Tragvorrichtung ein dreiphasiges System mit jeweils zwei Leiterbündeln pro Phase auf dem Stator gewickelt werden kann.

Die Trommeln mit dem Wicklungsdraht sind um eine zentrale Drehachse der Tragvorrichtung herum schwenkbar angeordnet. Durch diese Anordnung ist es möglich, eine sich aus der Drehung des Stators in der Haltevorrichtung ergebende Verdrehung der Leiterbündel durch entsprechendes Mitdrehen der Trommeln auf den Tragvorrichtungen auszugleichen. Weitere vorteilhafte Ausführungsformen der Erfindung sind in den Unteransprüchen angegeben.

Nachfolgend wird die Erfindung anhand in der Figuren näher beschrieben. Dabei zeigen:
- Fig. 1: vereinfacht einen Stator eines Ringgenerators in einer Haltevorrichtung;
- Fig. 2: einen Querschnitt durch ein Leiterbündel;
- Fig. 3a: einen Teil der Statornuten mit eingelegten Leiterbündeln;
- Fig. 3b: einen Teil der Statornuten mit eingelegten Leiterbündeln;
- Fig. 3c: einen bekannten Aufbau einer Statorwicklung;
- Fig. 3d: einen Aufbau einer Statorwicklung;
- Fig. 4: vereinfacht eine erfindungsgemäße Tragvorrichtung in einer Seitenansicht;
- Fig. 5: eine Vorderansicht einer Tragvorrichtung; und
- Fig. 6: die Anordnung von Tragvorrichtungen und Stator zum Herstellen einer Statorwicklung.

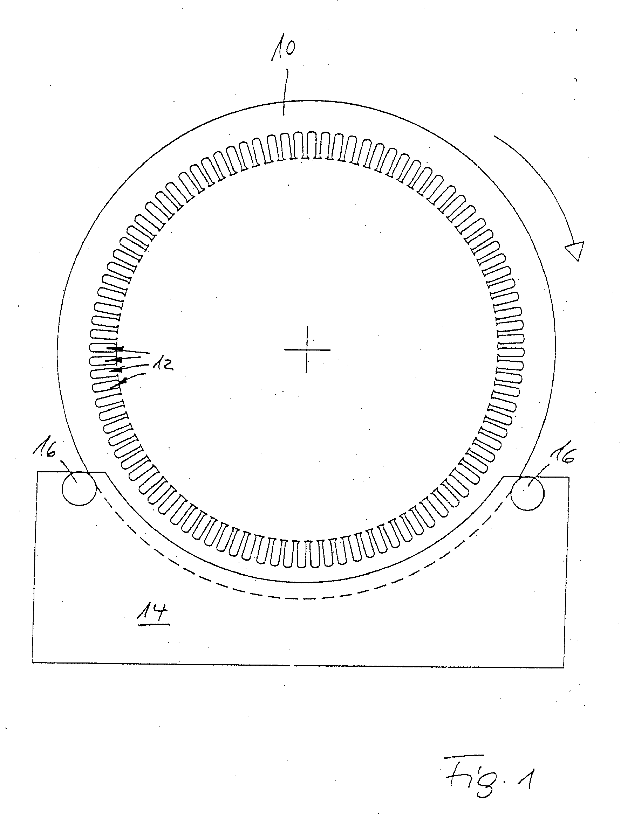

In Fig. 1 bezeichnet das Bezugszeichen 10 den Stator, der am inneren Umfang in axialer Richtung verlaufende Nuten 12 aufweist. Dies ist die häufigste Bauform eines Generators. Der (nicht dargestellte) Läufer befindet sich innerhalb des Stators 10. Diese Bauform wird als Innenläufer bezeichnet. Alternativ können die Nuten 12 bei einem sogenannten Außenläufer, bei dem der Läufer den Stator 10 umschließt, am äußeren Umfang des Stators vorgesehen sein. Die Nuten 12 sind in der Fig. vergrößert dargestellt. Der Stator 10 ist in einer Haltevorrichtung 14 gehalten, die auf dem Boden steht und somit den Stator 10 und insbesondere die Nuten 12 in einer Höhe hält, die eine arbeitsphysiologisch günstige Arbeitsposition bildet.

Da ein solcher Stator 10 eines Ringgenerators einen Durchmesser von mehreren Metern und entsprechend ein hohes Gewicht aufweist, ist der Stator 10 auf Drehlagern 16 drehbar gelagert und kann z.B. in Richtung des Pfeiles um ein gewünschtes Maß gedreht werden, um die zu bearbeitenden Nuten 12 in eine gewünschte Position zu bringen. Diese Drehung des Stators 10 kann natürlich unter Verwendung eines (nicht dargestellten) Antriebsmotors erfolgen.

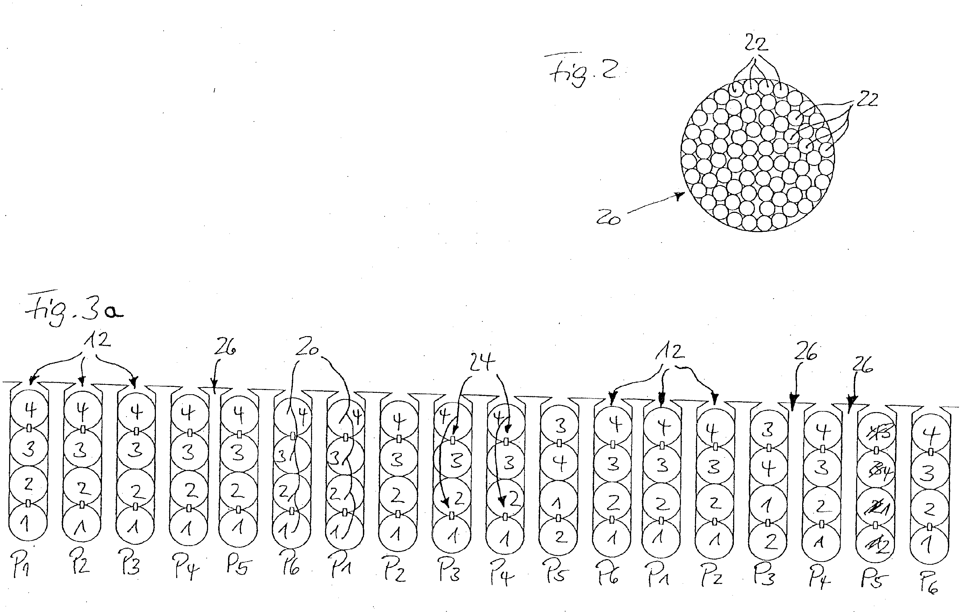

In Fig. 2 ist ein Leiterbündel 20 dargestellt, das aus einer Mehrzahl einzelner Leiter 22 besteht, die als Bündel in die Nuten (Bezugszeichen 12 in Fig. 1) eingelegt werden. Dabei sind die einzelnen Leiter 22 durch eine Beschichtung gegeneinander isoliert.

Die Bildung von Leiterbündeln 20 aus einzelnen Leitern 22 hat den Vorteil, dass diese Leiterbündeln in ihrer Querschnittsform nicht festgelegt, sondern veränderbar sind, so dass sie einerseits durch eine relativ enge Nutöffnung geführt werden, aber andererseits dann durch entsprechende Verformung den breiteren Nutquerschnitt weitestmöglich ausfüllen können, um eine guten Füllfaktor der Nut (Bezugszeichen 12 in Fig. 1) zu erreichen.

Fig. 3a zeigt eine abgewickelte Sektion vom Innenumfang des Stators 10. Die Nuten 12 sind hier horizontal nebeneinander angeordnet. In die Nuten 12 sind die Leiterbündel eingelegt, die hier vereinfacht als kreisrunde Leiterbündel 20 dargestellt sind. Jeweils zwei dieser Leiterbündel 20 werden zu einer Windung einer Phase zusammengefasst. Dieses ist in der Fig. durch Stege 24 dargestellt, die jeweils zwei der Leiterbündel 20 verbinden. Demnach sind entsprechend der Darstellung in dieser Fig. in jede Nut zwei Windungen einer Phase eingelegt. Zur einfacheren Übersicht sind die einzelnen Leiterbündel von unten nach oben mit Zahlen 1 - 4 durchnummeriert. Zur Unterscheidung der einzelnen Phasen des hier dargestellten sechsphasigen Systems sind diese unterhalb der Nut mit den Bezeichnungen P1 - P6 kenntlich gemacht.

In der Fig. ist leicht zu erkennen, dass die Leiterbündel 1 und 2 stets die erste Windung bilden, während die Leiterbündel 3 und 4 stets die zweite Windung bilden, die in die entsprechende Nut 12 eingelegt ist.

In der Fig. 3a mit der Betrachtung links beginnend, sind die Phasen P1 - P6 nebeneinander in aufsteigender Reihenfolge dargestellt und die Abfolge der Leiterbündel ist durch die Bezugszeichen 4, 3, 2, 1 angegeben. Nach der Nut 12 mit der Phase P6 wiederholt sich diese Phasen-Folge erneut mit P1 beginnend. Bei der in dieser Fig. dargestellten zweiten Nut 12 mit der Phase P5 ist nun die Reihenfolge der Leiterbündel 20 verändert. Die in der Nut 12 unten angeordnete erste Windung besteht zwar immer noch aus den Leiterbündeln 1 und 2, diese sind jedoch in ihrer Reihenfolge vertauscht. Ebenso besteht die zweite Windung immer noch aus den mit 3 und 4 bezeichneten Leiterbündeln 20, diese sind jedoch ebenfalls in ihrer Reihenfolge vertauscht. Die daneben angeordnete Phase P6 weist wieder die bereits bekannte Abfolge der Leiterbündel auf.

Im rechten Teil dieser Fig. sind nochmals die Phasen P1 - P6 dargestellt. Zusätzlich zu der Vertauschung der mit 1 und 2 bzw. 3 und 4 bezeichneten Leiterbündel 20 der Phase P5 sind hier ebenfalls die Leiterbündel der Phase P3 vertauscht dargestellt. Natürlich bilden auch hier die mit 1 und 2 bezeichneten Leiterbündel 20 die erste Windung und die mit 3 und 4 bezeichneten Leiterbündel 20 bilden die zweite Windung dieser Phase, allerdings ist innerhalb der Windung wiederum die Position der Leiterbündel vertauscht.

Der Grund für diese Vertauschung wird erkennbar, wenn man sich verdeutlicht, dass die magnetischen Feldlinien nicht nur in Längsrichtung der die Nuten 12 seitlich begrenzenden Schenkel 26 verlaufen, sondern auch durch die Nuten hindurch zwischen zwei Schenkeln 26 mit unterschiedlicher Polarität. Dadurch ergibt sich eine Stromverdrängung in den einzelnen Leiterbündeln 20 abhängig von deren Lage in der Nut 12.

Vertauscht man nun die Position der Leiterbündel in bestimmten Abständen, werden beide Leiterbündel 20 einer Windung entsprechend abwechselnd dieser Wirkung unterworfen, so dass bei geeigneter Auswahl der Vertauschungsposition und Häufigkeit beide Leiterbündel 20 einer Phase dieser Wirkung etwa gleichmäßig unterworfen sind, so dass nennenswerte Ausgleichsströme, die aus einer ungleichmäßigen Beaufschlagung resultieren, nicht fließen und somit der maximal mögliche Strom vom Generator abgegeben werden kann.

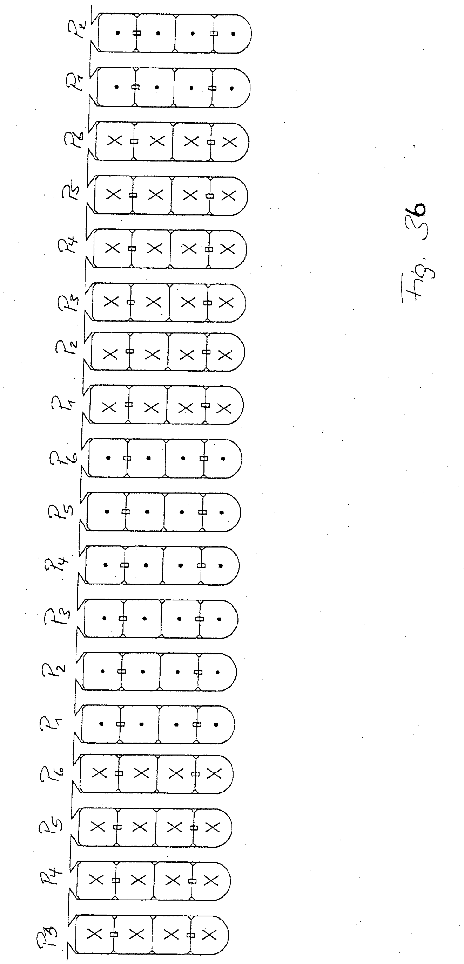

Fig. 3b zeigt also die Darstellung der Statornuten mit darin eingelegten Statorwicklungen bzw. Statorleitern, wobei zu erkennen ist, dass die Statornuten weitestgehend mit den Wicklungen gefüllt sind und wobei auch die Stromflussrichtung in den Leitern (Pfeilspitze, Pfeilkreuz) zu erkennen ist. Außerdem ist die Anordnung der Phasen gegenüber Fig. 3a verändert, um auch den Wechsel im Wicklungssinn besser zu verdeutlichen. Die Darstellung gemäß Fig. 3b macht aber auch deutlich, dass mehr als 80%, bevorzugt mehr als 95% des gesamten Raumes der Statornut mit Wicklungen ausgefüllt ist und somit der Luftanteil in der Statornut äußerst gering ist.

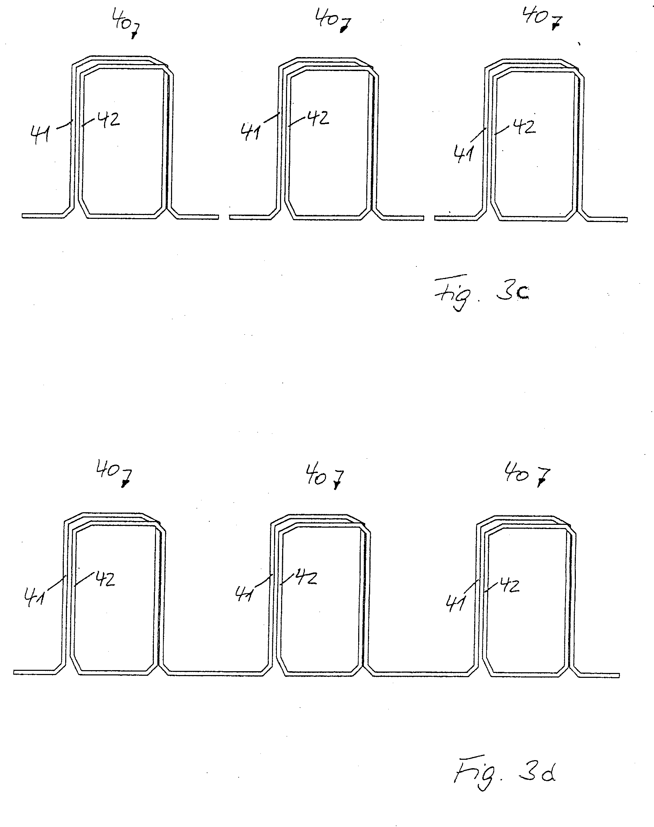

Fig. 3c zeigt einen Teil einer konventionell hergestellten Wicklung, allerdings ohne die Darstellung des Stators und der Nuten, in welche die Wicklung eingelegt ist. Die Wicklung ist dabei aus Formspulen 40 gebildet, die zwei Windungen 41, 42 aufweisen. Diese Windungen 41, 42 sind zur besseren Erkennbarkeit zueinander versetzt dargestellt. In der (in dieser Fig. nicht dargestellten) Nut sind diese natürlich exakt übereinander angeordnet.

Dargestellt sind drei Formspulen 40 einer Phase. Der Abstand ergibt sich daraus, dass zwischen Formspulen dieser Phase alternierend Formspulen der übrigen Phasen des Stators angeordnet, jedoch in der Fig. nicht dargestellt sind. Die Verbindung der Formspulen 40 einer Phase untereinander kann durch Lötverbindungen oder Schraub-KlemmVerbindungen oder ähnliche Techniken erfolgen.

Diese in Fig. 3c dargestellten Verbindungen sind potentielle Störungsquellen.

Fig. 3d zeigt die Ausführung einer durchgängig gewickelten Phase. Auch hier ist entsprechend der Darstellung in Fig. 3b wiederum ein Teil der Wicklung einer Phase dargestellt.

Dabei sind die einzelnen Windungen 41, 42 ebenfalls versetzt gegeneinander dargestellt, um die Art der Ausführung zu verdeutlichen.

Bei dieser Ausführungsform ist sofort erkennbar, dass die als potentielle Störungsquelle in Fig. 3b dargestellten Übergänge bei dieser Erfindung beseitigt sind. Eine Unterbrechung kann daher an den Übergängen zwischen den einzelnen Wicklungsabschnitten nicht mehr auftreten.

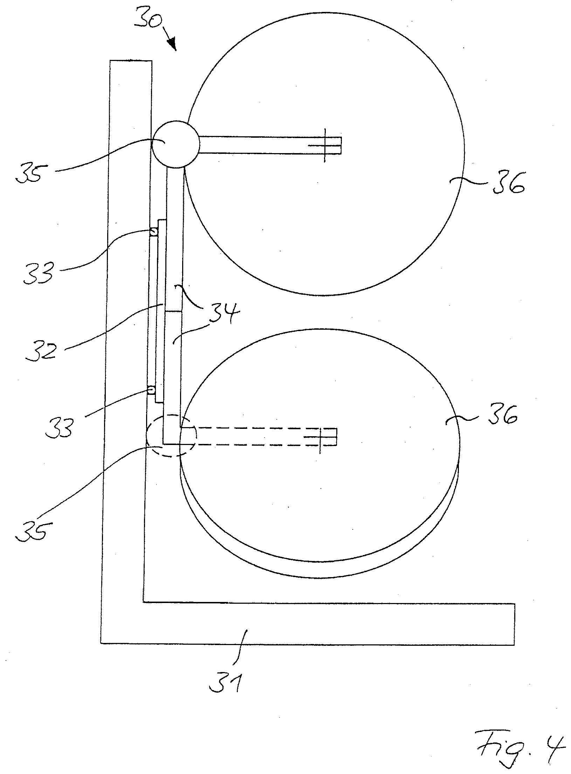

Fig. 4 zeigt eine Tragvorrichtung 30 für die als Wicklungsdrähte verwendeten Leiterbündel in der Seitenansicht. Ein L-förmiges Grundgestell 31 bewirkt einen sicheren Stand der gesamten Tragvorrichtung 30. Eine Tragplatte 32 ist über ein Drehlager 33 mit dem Grundgestell 31 verbunden. Auf der Tragplatte 32 sind Tragarme 34 befestigt, die vom Zentrum der Tragplatte 32 aus einen vorgegebenen Abschnitt zur Peripherie der Tragplatte 32 hin verlaufen und sich eine vorgegebene Länge im Wesentlichen horizontal von der Tragplatte 32 fort erstrecken.

An diesen sich horizontal erstreckenden Abschnitten der Tragarme 34 sind Trommeln 36 mit den als Wicklungsdraht verwendeten Leiterbündeln drehbar befestigt.

Zwischen dem parallel zu der Tragplatte 32 verlaufenden vertikalen Abschnitt des Tragarmes 34 und dessen horizontal verlaufenden Abschnitt ist ein Drehlager (nicht dargestellt) vorgesehen. Dieses Drehlager wirkt mit einem Antrieb 35 zusammen und erlaubt eine Drehung des horizontalen Abschnittes des Tragarmes 34 um seine Längsachse zusammen mit den daran angeordneten Trommeln 36. Dadurch kann einer Verdrallung, die beim Wickeln der Statorwicklung zwischen den Leiterbündeln dieser Wicklung entsteht, entgegengewirkt werden.

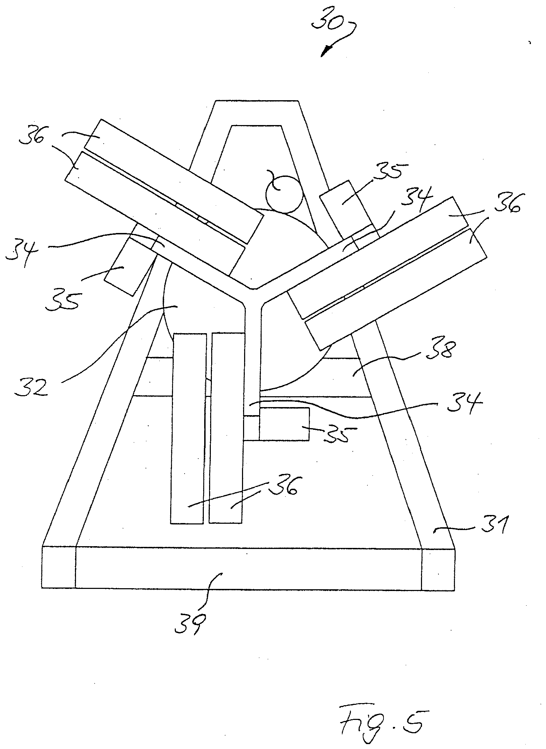

Fig. 5 zeigt eine Vorderansicht dieser Tragvorrichtung 30. Hier ist ein sich von der Basis zur Spitze hin verjüngendes Grundgestell 31 dargestellt. Zur Erhöhung der Stabilität sind zwei Traversen 38 und 39 vorgesehen.

Auf dem Grundgestell 31 ist die Tragplatte 32 drehbar angeordnet auf der Tragplatte 32 sind drei jeweils um einen gleichen Winkel (120°) versetzte Tragarme 34 angeordnet, an deren im Wesentlichen horizontal verlaufenden Auslegern jeweils zwei Trommeln 36 für die Leiterbündel befestigt sind. Durch die drehbare Lagerung der Tragplatte 32 und die damit über die Tragarme 34 fest verbundenen Trommeln 36 kann durch einen zweiten Motor 37 gedreht werden.

Beim Herstellen der Wicklung auf dem Stator 10 wird jedes Leiterbündel 20 in eine Nut 12 eingelegt, am Ende der Nut 12 im Wicklungskopf abgebogen und bis zu einer neuen, parallel verlaufenden Nut 12 im Wicklungskopf geführt. Dann wird das Leiterbündel 20 wiederum so abgebogen, dass es in diese Nut 12 eingelegt werden kann. Am Ausgang dieser Nut 12 wird das Leiterbündel 20 im Wicklungskopf wiederum so abgebogen, dass es zu der nächsten Nut 12 geführt werden kann. Dadurch ergibt sich natürlich auch in dem zur Trommel 36 hin verlaufenden Leiterbündel 20 eine entsprechende Verdrehung.

Die Trommeln 36 sind paarweise an den horizontalen Abschnitten der Tragarme 34 angeordnet. Da diese horizontalen Abschnitte durch die Antriebe 35 um ihre Längsachse drehbar sind, werden die Trommeln 36 mitgedreht. Auf diese Weise kann einer Verdrallung der Leiterbündel durch Drehen des entsprechenden Tragarmes 34 entgegen gewirkt werden.

Ein zweiter Antrieb 37 ist zwischen dem Grundgestell 31 und der Tragplatte 32 angeordnet und erlaubt eine Rotation der Tragplatte 32 mit sämtlichen darauf angeordneten Tragarmen 34 und Trommeln 36, um die Rotation des Stators 10 in dem Statorhalter 14 ebenfalls auszuführen und auf diese Weise eine Verdrallung der Leiterbündel zu vermeiden.

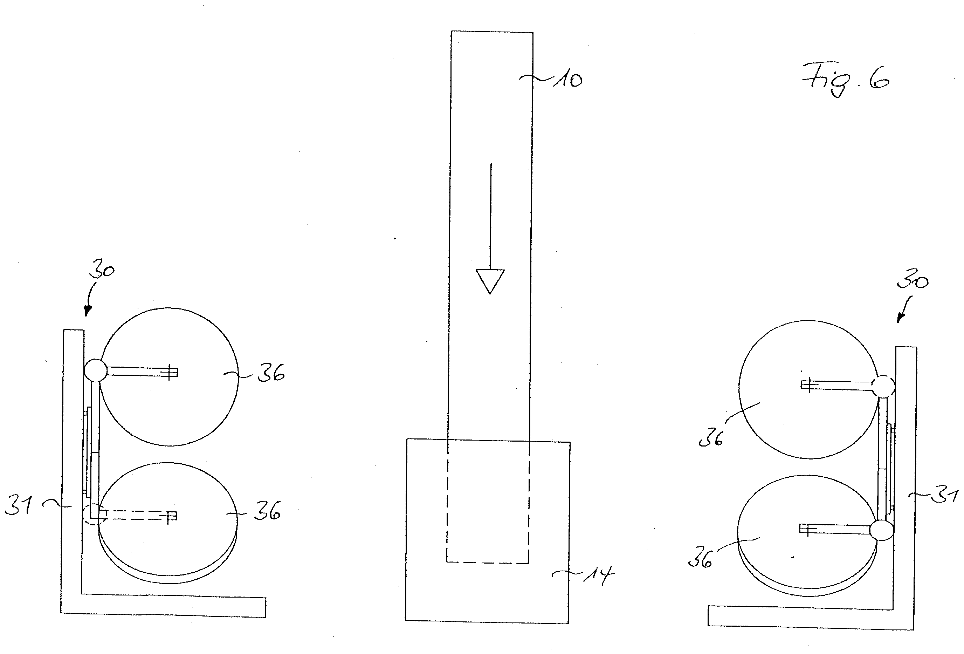

Fig. 6 zeigt vereinfacht und ohne Leiterbündel zwischen den Tragvorrichtungen 30 und dem Stator 10 die Anordnung zweier Tragvorrichtungen 30 und eines zu bewickelnden Stators 10. Der Stator 10 ist in einer Haltevorrichtung 14 gelagert und in Umfangsrichtung (Pfeilrichtung) drehbar. Da jede der Tragvorrichtungen 30 ebenfalls drehbar gelagerte Trommeln 36 aufweist, können diese die Drehung des Stators durch eine entsprechende Drehung mit ausführen bzw. nachvollziehen. Durch eine Bereitstellung von zwei Tragvorrichtungen 30 mit jeweils drei Trommel-Paaren können also gleichzeitig sechs Phasen auf einem Stator gewickelt werden.

Es liegt auf der Hand, dass die vorliegende Erfindung nicht nur auf Ringgeneratoren für Windenergieanlagen anwendbar ist, sondern grundsätzlich auf jede Synchronmaschine, wobei deutlich gemacht werden muss, dass es sich hierbei nicht um Kleinstmaschinen handelt, sondern um Maschinen, welche über einen erheblichen räumlichen Umfang verfügen und welche regelmäßig Anschlusswerte von unter Umständen mehreren 100 kW und mehr haben. Für einen Ringgenerator einer Windenergieanlage ist beispielsweise eine Nennleistung von mehr als 500 kW typisch, auch Generatoren mit einer Nennleistung von mehr als 4 MW werden bereits getestet und zukünftig eingesetzt. Allein der Stator der beschriebenen Synchronmaschine wiegt mehrere Tonnen, bei Ringgeneratoren mit über 4 MW, unter Umständen noch mehr als 50 Tonnen.

## Patentansprüche

1. Vorrichtung zur Herstellung eines Stators einer Synchronmaschine mit mehreren 100 kW Nennleistung, bei dem am inneren oder äußeren Umfang voneinander beabstandet Nuten zur Aufnahme einer Statorwicklung ausgebildet sind, wobei die Wicklung ohne Unterbrechung durchgängig gewickelt ist, wobei der Durchmesser des Stators mehrere Meter beträgt, mit
einer Lagervorrichtung für den Stator, in welcher der Stator stehend gehalten wird, und
wenigstens einem Antrieb zum Drehen des Stators in der Lagervorrichtung in seine Umfangsrichtung.

2. Vorrichtung nach Anspruch 1,
**gekennzeichnet durch** eine von der Lagervorrichtung (14) getrennte Tragvorrichtung zum Halten wenigstens einer Trommel mit Wicklungsdraht.

3. Vorrichtung nach Anspruch 2,
**gekennzeichnet durch** eine paarweise Anordnung mehrerer Trommeln, wobei die Paare der Trommeln auf einem gedachten Kreis gleichmäßig beabstandet angeordnet sind.

4. Vorrichtung nach einem der vorstehenden Ansprüche,
**gekennzeichnet durch** eine an jeder Stirnseite des Stators angeordnete Tragvorrichtung.

5. Vorrichtung nach einem der vorstehenden Ansprüche,
**gekennzeichnet durch** eine Anzahl der Paare der Trommeln gleich der Anzahl der auf dem Stator zu wickelnden Phasen.

6. Vorrichtung nach Anspruch 5,
**dadurch gekennzeichnet, dass** jede der Tragvorrichtungen je die Hälfte der Trommel trägt.

7. Vorrichtung nach einem der vorstehenden Ansprüche,
**gekennzeichnet durch** eine im Wesentlichen vertikal angeordnete Tragplatte und vom Zentrum der Tragplatte nach außen verlaufende Tragarme zur Aufnahme der Trommeln.

8. Vorrichtung nach Anspruch 7,
**gekennzeichnet durch** eine drehbare Lagerung der Tragplatte.

9. Vorrichtung nach Anspruch 8,
**gekennzeichnet durch** einen Antrieb zum Drehen der Tragplatte in Umfangsrichtung.

10. Vorrichtung nach einem der Ansprüche 7 - 9, **dadurch gekennzeichnet,**
**dass** die Trommeln an einem im Wesentlichen horizontal verlaufenden Abschnitt der Tragarme (34) angebracht sind und dass der horizontal verlaufende Abschnitt um seine Längsachse drehbar ausgebildet ist.

## Claims

1. A device for producing a stator of a synchronous machine with a rated output of several hundred kW, in which grooves for receiving a stator winding are formed spaced apart on the inner or outer periphery, wherein the winding is wound continuously without interruption, wherein the diameter of the stator amounts to several metres, with a bearing device for the stator, in which the stator is held vertically, and
at least one drive for turning the stator in the bearing device in its circumferential direction.

2. A device according to Claim 1,
**characterised by** a supporting device separate from the bearing device (14) for holding at least one drum with winding wire.

3. A device according to Claim 2,
**characterised by** an arrangement in pairs of a plurality of drums, the pairs of drums being arranged uniformly spaced apart on a notional circle.

4. A device according to one of the preceding claims,
**characterised by** a supporting device arranged on each end face of the stator.

5. A device according to one of the preceding claims,
**characterised by** a number of pairs of drums equal to the number of the phases to be wound on the stator.

6. A device according to Claim 5,
**characterised in that** each of the supporting devices bears half of the drum each.

7. A device according to one of the preceding claims,
**characterised by** a substantially vertically arranged supporting plate and supporting arms, extending outwards from the centre of the supporting plate, for receiving the drums.

8. A device according to Claim 7,
**characterised by** rotatable mounting of the supporting plate.

9. A device according to Claim 8,
**characterised by** a drive for turning the supporting plate in the circumferential direction.

10. A device according to one of Claims 7 - 9, **characterised in that**
the drums are attached to a substantially horizontally extending portion of the supporting arms (34), and **in that** the horizontally extending portion is designed to be rotatable about its longitudinal axis.

## Revendications

1. Dispositif servant à fabriquer un stator d'une machine synchrone avec une puissance nominale de 100 kW, où des rainures servant à recevoir un enroulement de stator sont réalisées au niveau de la périphérie intérieure ou extérieure à distance les unes des autres, dans lequel l'enroulement est enroulé en continu sans interruption, dans lequel le diamètre du stator est de plusieurs mètres, avec
un dispositif de palier pour le stator, dans lequel le stator est maintenu en position debout, et
au moins un entraînement servant à faire tourner le stator dans le dispositif de palier dans sa direction périphérique.

2. Dispositif selon la revendication 1,
**caractérisé par** un dispositif de support séparé du dispositif de palier (14), servant à maintenir au moins un tambour avec un fil d'enroulement.

3. Dispositif selon la revendication 2,
**caractérisé par** un ensemble par paire de plusieurs tambours, dans lequel les paires des tambours sont disposées à distance de manière homogène sur un cercle imaginaire.

4. Dispositif selon l'une quelconque des revendications précédentes,
**caractérisé par** un dispositif de support disposé au niveau de chaque côté frontal du stator.

5. Dispositif selon l'une quelconque des revendications précédentes,
**caractérisé par** un nombre des paires des tambours identique au nombre des phases à enrouler sur le stator.

6. Dispositif selon la revendication 5,
**caractérisé en ce que** chacun des dispositifs de support supporte respectivement la moitié des tambours.

7. Dispositif selon l'une quelconque des revendications précédentes,
**caractérisé par** une plaque de support disposée sensiblement de manière verticale et par des bras de support s'étendant depuis le centre de la plaque de support vers l'extérieur, servant à recevoir les tambours.

8. Dispositif selon la revendication 7,
**caractérisé par** un palier rotatif de la plaque de support.

9. Dispositif selon la revendication 8,
**caractérisé par** un entraînement servant à faire tourner la plaque de support dans la direction périphérique.

10. Dispositif selon l'une quelconque des revendications 7 à 9, **caractérisé en ce**
**que** les tambours sont installés au niveau d'une section s'étendant sensiblement de manière horizontale des bras de support (34), et que la section s'étendant de manière horizontale est réalisée de manière à pouvoir tourner autour de son axe longitudinal.
